(19) Europäisches Patentamt / European Patent Office / Office européen des brevets

(11) **EP 1 624 628 B1**

(12) **EUROPEAN PATENT SPECIFICATION**

(45) Date of publication and mention
of the grant of the patent:
**09.03.2011 Bulletin 2011/10**

(51) Int Cl.:
**H04L 12/56** *(2006.01)*

(21) Application number: **05017026.5**

(22) Date of filing: **04.08.2005**

(54) **Central coordinator selection in ad hoc network**

Auswahl eines Zentralkoordinators in Ad-Hoc Netzwerken

Sélection d'un coordinateur central dans un réseau Ad-Hoc

(84) Designated Contracting States:
**DE FR GB**

(30) Priority: **06.08.2004 US 913881**

(43) Date of publication of application:
**08.02.2006 Bulletin 2006/06**

(73) Proprietor: **Sharp Kabushiki Kaisha
Osaka-shi, Osaka 545-8522 (JP)**

(72) Inventor: **Ayyagari, Deepak
Vancouver, WA 98684 (US)**

(74) Representative: **Müller - Hoffmann & Partner
Patentanwälte
Innere Wiener Strasse 17
81667 München (DE)**

(56) References cited:
**EP-A- 0 998 154      EP-A- 1 176 762
WO-A-02/054790      WO-A-03/007552
US-A- 6 026 303      US-B1- 6 751 196**

EP 1 624 628 B1

**Description**

Background and Summary of the Invention

This invention pertains to self organization of an ad hoc, plural-node communication network, and more specifically to the selection of a central coordinator node (CCo) in such a network. While this selection, as will be seen, can be performed preferably in different specific manners, all such manners are referred to herein as involving, effectively, an all-nodal participation. Two particular implementations of the invention are illustrated and described herein - one involving a distributed network, and the other a centralized network.

Implementation of the invention assumes that certain predecessor organizational activities have already taken place, and specifically, activities that have resulted in the creation, for organizational use, of a full topology map of the emerging, subject network. These "predecessor activities" may, if desired, be in the nature of ongoing "background" network organizational activities involving the dynamic creation and recreation, over time, of such a map. Under such dynamic circumstances, the "predecessor" status from which this invention launches is whatever then is the current status of the "dynamic" topology map. Accordingly, reference herein to selecting a central coordinator node is intended to include the concept, in the appropriate network setting, of coupling such a selecting activity to the dynamic topology map establishing process. Where such a coupling in fact occurs, the central coordinator selection process itself becomes a living, dynamic and transient practice — one which offers significant flexibility and capability for assuring the ever-omnipresence, so-to-speak, of the best "currently chooseable" CCo.

Such a topology map identifies all participating nodes, and describes their respective relevant attributes, capabilities and conditions (qualities) of inter-nodal connectivity. From such map information, network organization can proceed in a manner well directed in terms of then selecting the best candidate node to be CCo, to identify so-called hidden nodes and proxy nodes, and to produce an organized network which offers the best producible and most efficient pattern of high-quality, bi-directional communication links between nodes.

Explaining briefly certain terminology which is employed herein, a hidden node (HN) is one that cannot "see", or be "seen" by, a selected CCo. A proxy node (PCo) is one which acts as a surrogate CCo in an indirect communication path between a hidden node and a selected CCo. A proxy node facilitates communication between a CCo and a hidden node.

CCo selection can occur advantageously in a number of different situations, such as: (a) initial (first) network organization; and (b) under various dynamic and/or changing conditions, such as (1) whenever a node leaves, or a new node enters, a network, (2) whenever some network incident has occurred that requires organizational recovery, (3) whenever it appears that a current CCo is no longer the best candidate for that role, and so on.

The CCo selection process proposed by the present invention, while very similar in many ways in the different network cases involving (a) a distributed network, and (b) a centralized network, there are specific differences which effectively spring from two different assumptions that are associated, respectively, with these two different kinds of networks. In the organizational process involving a distributed network, a foundation assumption is that there is (yet) no selected CCo. Just the opposite assumption is attached to the process involving a centralized network.

In the organizational process involving a distributed network, all nodes participate in CCo decision-making (selection) through making individual analyses performed on "copies" of the full network topology map which each node possesses. From these analyses, and by the applications of certain rules and priorities which will be discussed herein, all nodes then make a choice regarding what is deemed by them to be the best choosable CCo. Tie conditions between competing candidates for that role are resolved in a manner also which will be described in the detailed description of the invention.

In the organizational process involving a centralized network, the assumption mentioned which is associated with this kind of a network causes the very first node (single device) to enter the network effectively to self-declare itself to be the CCo, with this declaration only becoming positively confirmed, if at all, only after there has been an appropriate analysis by it of the full network topology map, conducted by that node on the basis of reviewing the individual discovered nodes lists possessed by all of the participating nodes, thus to choose the best candidate CCo.

Useful and related background information is found in prior-filed, co-pending U.S. Regular Patent Applications filed by me on February 9, 2004 including (a) Serial No. 10/775,717 for "Centralized Network Organization and Topology Discovery in Ad-Hoc network with Central Controller" and, (b) Serial No. 10/775,967 for "Distributed Network Organization and Topology Discovery in Ad-Hoc Network".

US 6.751.196 B1 discloses a method for selecting a central coordinator node in a network by analyzing a topology map. The method uses criteria describing the quality of network links between different nodes, for instance the signal/noise ratio of a received signal.

In EP 0 998 154 A2 a method for selecting a central coordinator node in a network by analyzing a topology map is described. Besides criteria describing the quality of network links between different nodes, the method further uses criteria describing functionalities of the nodes themselves, for instance the capability of a node to be driven by a stable power supply.

However, the methods described in these documents do not use a criterion describing how many resources a node uses for transmitting data of its own node. Selecting a node which uses its resources for its own purposes as the central coordinator node of the network may result in delay of communication within the network.

It is therefore the object of the invention to provide a method for selecting a central coordinator node which solves this problem.

This object is achieved by a method according to claim 1. Embodiments are claimed in the dependent claims.

The various features and advantages that are offered by the present invention, in relation to the selection of a central coordinator node in an ad hoc network of the types mentioned above, will become more fully apparent as the detailed description which now follows is read in conjunction with the accompanying drawings.

Description of the Drawings

Fig. 1 illustrates, in block/schematic form, a network environment which has been chosen for illustration of practice of the present invention.

Fig. 2 is a block/schematic flow diagram which describes the practice of the present invention, both in relation to a distributed-type network, and in relation to a centralized-type network.

Fig. 3 pictures a representative portion of a full network topology map (or table) which is employed in the practice of the invention for, among other reasons, the selection of a central coordinator node in accordance with practice of the invention.

Fig. 4 illustrates a priority order of criteria considerations employable during network organization wherein a tie exists between prospective CCo candidates.

Detailed Description of the Invention

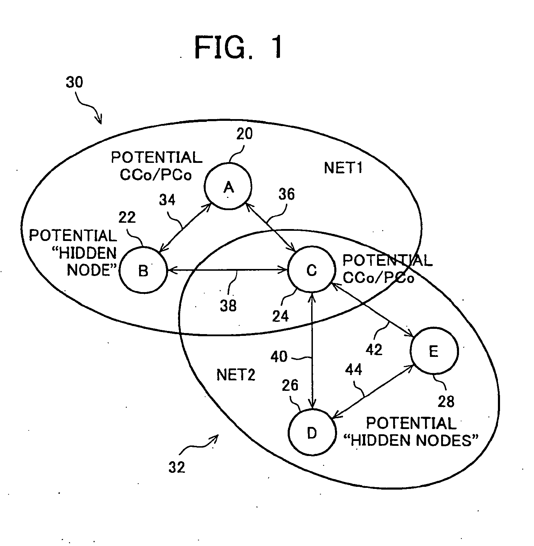

Turning attention now to the drawings, and beginning with Fig. 1, here five nodes 20, 22, 24, 26, 28, also referred to respectively by the letters A, B, C, D, E, are shown organized, for illustration purposes, into two possible networks, or network topologies, 30, 32. Topologies 30, 32 are also referred to herein, respectively, as Net 1 and Net 2. Viable interconnections which relate to these two illustrative organizations are shown at 34 (between A, B), 36 (between A, C), 38 (between B, C), 40 (between C, D), 42 (between C, E), and 44 (between D, E).

Looking at these two topologies, or configurations, and recognizing initially that any of the nodes could be the CCo, Net 1 (30) has node A as the CCo, has nodes B and C as hosts within the network, and has node C as a PCo for hidden nodes D and E. Net 2 (32) has node C as the CCo, nodes D and E as hosts within the network, and node C as a PCo for hidden nodes A and B. A network with only nodes A, B and C as host nodes, and with node A as the CCo, would leave nodes D and E unconnected. Network performance will be significantly different in the two configurations based, among several other factors, on the traffic load handled by nodes chosen as CCos, by the overhead of having a node function as a PCo (separate from a CCo), and if the qualities (capacities) of links between the CCo and the other nodes vary. In Net 2, node C can act both as the CCo and the PCo, and can directly communicate with all four other nodes. In Net 1, node A, as the CCo, can only communicate directly with two other nodes (B and C), and needs a proxy to handle nodes D and E.

It is now with reference to the node arrangement pictured in Fig. 1 that the CCo selection process of the present invention is described.

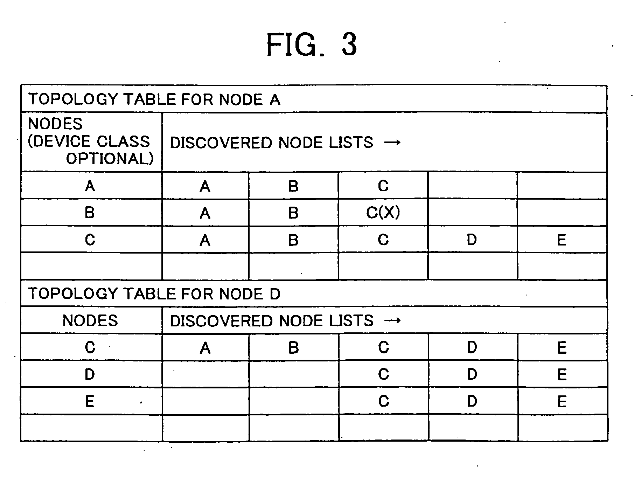

Through any appropriate procedure which forms no part of the present invention, a procedure to be referred to herein as a topology discovery procedure, the topology of a proposed network including a collection of plural nodes, such as the collection of nodes illustrated in Fig. 1, is implemented in order to create, in one form or another, a fully informative topology map, or table. Such a map fully describes the identities of all intended participating nodes, and additionally describes relevant characteristics required to be known for effective network organization, including node characteristics and capabilities, and especially the states of internodal connectivity which exist between nodes in pairs of nodes. Fig. 3 in the drawings illustrates a portion of such an overall topography map, including information relating to the so-called discovered nodes lists of each participating node. Specifically, Fig. 3 shows the individual, overall topology tables possessed by nodes A and D in Fig. 1.

The following assumptions are now made with respect to such a topology map. In the case of a distributed network, copies of this map reside in the respective possessions of each node in the organizing network. In a centralized network, an overall topology table or map is fundamentally resident principally with whatever node is currently acting as a CCo (see the discussion above which relates to how an initial CCo may be put into place in such a network).

Describing what is specifically shown in Fig.5, and doing this just with respect to node A, the topology table for this node consists of its own discovered nodes list (A, B, C) in the first column. Since node A is also to be thought of, in this illustration, as being the current CCo, this node, in a centralized network, maintains the discovered nodes lists of nodes D and E as well, which nodes are herein hidden nodes. In a distributed network, all nodes possess this same knowledge.

The rows in Fig. 3 correspond to discovered nodes lists received from certain nodes (individually, locally possessed nodes lists which provide, for each node, a locally possessed topology map). For example, the discovered nodes lists of node A is (A, B, C). That of node C is (A, B, C, D, E). That of node D is (C, D, E), and so on.

Fig. 3 has further been constructed to illustrate that it may be possible that node B can hear node C, but that node C might not be able to hear node B. This implies that the link between nodes B and C is not operational in both directions (i.e. is non-bi-directional), and hence is not a valid link. This condition is illustrated by (X) in the discovered nodes list from node B in node A's own topology table. Node B does show up in node C's list.

Those familiar and conversant with the relevant art involving the topology of a network will find the contents of Fig. 3 to be self explanatory, and it is from the information which is contained in an overall network topology table, such as that partially illustrated in Fig. 3, that the process of CCo selection progresses.

With respect to both kinds of network organizations being discussed herein, what immediately follows from discovery and construction of a full topology table includes several steps, or stages, which are precursors to the eventual selection of a CCo. These several precursor stages are now set forth under the three center headings which appear next in this text.

Topology Table Analysis

Accordingly, considering now the process of topology table analysis, let DA represent the discovered nodes list for node A, i.e. the set consisting of the identities of all nodes that node A has heard.

The topology table for node A is then defined as a tabulation of the discovered nodes lists for all the nodes in $D_A$ i.e.,

$$T_A = \{D_i\} \quad \forall \quad i \in D_A$$

Non-Bidirectional Link Detection

Considering two nodes, $i$ and $j$. If a node $i$ has been discovered by node j, i.e., if the identity of $i$ is an entry in the discovered nodes list of node $j$, but node $j$ has not been discovered by node i, i.e., there is no entry for node $j$ in the discovered nodes list of $i$, then the link between i and $j$ is said to be non-bidirectional.

For any two nodes, i and k, if i, $k \in D_i \cap D_k$ then i and k have a bidirectional link, i <=> k

Organization of Network

A network can be defined as the largest collection of nodes from a group of nodes that participate in the topology discovery and network organization processes, where every node in the collection can hear every other node and be heard by every node in the collection. This implies that all nodes in a network have bi-directional links to each other. Define:
$N \equiv \{i\}$, where i represents node IDs and $\forall i, j \in N, i <=> j$ and
$|N| \geq \{$ Any Collection of nodes $\{j\}$ where $\forall i, j \in N, i <=> j\}$

The second condition present in the mathematical expression appearing immediately above is optional. One may thus define a network simply as any collection of nodes wherein the nodes are connected to each other bi-directionally. The node can determine the network N based on the above definition by examining the topology table and determining the set of nodes which have the properties defined in this expression.

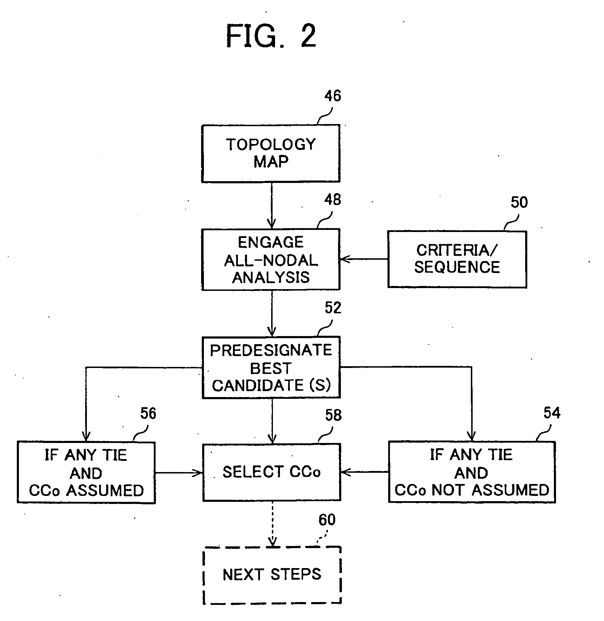

Continuing now, and turning attention for a moment to Fig. 2 in the drawings, here there are shown, in solid outline, seven blocks 46, 48, 50, 52, 54, 56, 58, and a single dash-triple-dot block 60 which collectively illustrate practice of the present invention somewhat differentially with respect to the two different kinds of ad hoc networks, distributed and centralized, with respect to which the present invention is now being illustrated and described. Reviewing Fig. 2 as a way generally to visualize practice of the present invention, block 46 represents and overall topology table, such as that which is partially illustrated in Fig. 3. With such a map available, all nodes in the emerging network engage in analysis of that map (block 48), and apply certain selection/designation criteria (block 50), shortly to be described, to pre-designate what appears to be the best candidate to become the network CCo (block 52). Some of the activities associated with blocks 46-52, inclusive, have been detailed above in the three center-heading portions of this disclosure labeled "Topology Table Analysis", "Non-Bi-directional Link Detection", and "Organization of Network".

If, following pre-designation of the apparent best CCo candidate in block 52 ultimately produces the identity only of a single candidate, control passes to block 58, wherein a current CCo is selected in preparation for performance of next-successive steps, if any are required, in the total organization of the desired network (block 60). If in the operation of block 52, there is a tie, say, between two candidate nodes to become CCo, and if the network being assembled is a distributed network, activity passes to block 54, wherein a particular selection protocol, soon to be described herein, is implemented to effect a singular CCo selection. If, on the other hand, such a tie exists in a setting wherein a centralized network is being organized, from block 52 activity control passes to block 56, wherein, also, certain particular steps are taken, as will shortly be described, to effect a singular CCo selection.

The details of such selection processes, depending upon which kind of network is being organized, now follow under an appropriate, respective heading for each of the two different types of ad hoc networks.

Selection of CCo - Distributed Network

Once the topology map has been analyzed, and a network has been generally organized, and the set N determined from the topology table, each node has to determine the node in N that is best suited to serve in the role of CCo. The criteria for choosing the CCo may be different. Any one or a combination of these criteria may be used in the selection of CCo. The criteria, such as those set forth in numbered paragraphs immediately below, must be agreed to and known by all of the nodes participating in the process.

1. Maximum Coverage: The node in the network N which supports bidirectional links with the maximum number of nodes provides the best coverage and may be deemed suitable to be a CCo. Then, by definition,

$$CCo \equiv Arg \max_i |D_i| \ \forall i \in N, and \text{ for every } k \in D_i, i, k \in D_i \cap D_k$$

2. Maximum Capacity: As a part of the process by which nodes develop the, topology map, nodes may exchange information on the quality of the reception for each node discovered. This would require a common agreement among all nodes on the parameters defining the transmission of inter-nodal messages, such as transmit power levels, modulation, coding etc. This quality indicator would convey to the transmitting node the quality of the link or communication channel between the two nodes, and would help the transmitter determine the best throughput (bits/sec) that may be possible on a given link or the link capacity. In the case of channels that may be time-varying (on rapid time scales), the quality indicator might be less relevant in determining potential capacity of the link. Assuming that the above method, or some alternate method not specified here, may be used to determine link capacity, the node which can support the best overall throughput, defined either as the maximum of the minimum throughputs on all links to/from that node, or as the sum of throughputs of all links to/from the node, may be chosen as the CCo. The node is selected from the set N.

3. Device Class: Based on the class of each of the nodes in N, the node in N with the best capabilities or the highest class may be chosen as the CCo.

4. Lowest Duty Cycle: In some networks, devices can only transmit or receive any given time. In such systems, it is useful to select as the CCo a node that is not busy transmitting data for its own purposes (such as a video server transmitting SDTV/HDTV). This allows the node to dedicate most of its processing resources to network control functions and more efficiently use available channel bandwidth. As a part of the topology map creation process, devices may exchange parameters to indicate how busy a node is likely to be. Communication may have an additional parameter which may be called an activity indicator which is a percentage of time the associated node is likely to spend transmitting/receiving data for purposes other than network control. The node with the lowest activity indicator may be chosen as the CCo in conjunction with other suitable criteria such as the coverage.

5. Combination of above factors: A combination of the above criteria may be used to determine the CCo. For example, a higher class device might get precedence over a lower class device even though the number of nodes reached by the lower class device is slightly higher. Or, a device that is not transmitting/receiving any data may have precedence over a device that is of a higher class, but one that is likely to be busy transmitting its own data.

6. Tie breaker (block 54): If there is a tie among nodes in N for choice of CCo, a candidate node uses a suitable contention access protocol to determine which node becomes the CCo. Every candidate node must listen to the communication channel for a random time interval before transmitting what may be called its CCo confirmation message to other nodes. The node that first transmits is by default the CCo. All candidate nodes remain silent once they receive such a confirmation message.

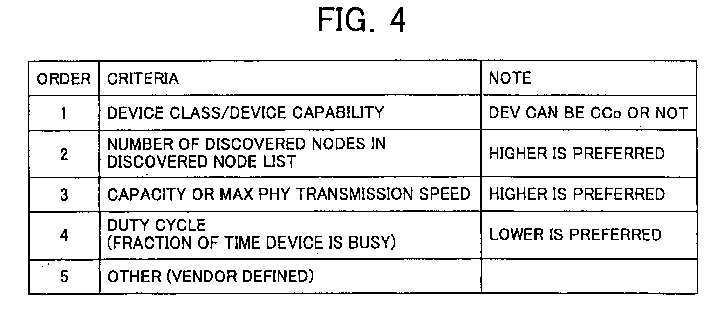

7. Order for selection of CCo: An alternative to prevent use of the tie breaker option can be expressed as follows. If there is a tie among nodes in N for choice of CCos, a random choice to be the new CCo may be made. This order of selection consideration is illustrated in Fig. 4.

Selection of CCo - Centralized Network

Following basic network organization, and with the set N determined from the topology table, each node has to determine the node in N that is best suited to serve in the role of CCo. The criteria for choosing the CCo may be different. Any one or a combination of these criteria may be used in the selection of CCo. The criteria must be agreed to and known by all the nodes participating in the process.

1. Maximum Coverage: The node in the network N which supports bidirectional links with the maximum number of nodes provides the best coverage and may be deemed suitable to be a CCo. Then, by definition:

$$CCo \equiv Arg \max_i |D_i| \; \forall i \in N, \text{ and for every } k \in D_i, i, k \in D_i \cap D_k$$

2. Maximum Capacity: Nodes may exchange information on the quality of the reception for each node discovered during formation of the topology table. This would require a common agreement among all nodes on the parameters defining the transmission of the messages in these states such as transmit power levels, modulation, coding etc. This quality indicator would convey to the transmitting node the quality of the link or communication channel between the two nodes and help the transmitter determine the best throughput (bits/sec) that may be possible on a given link or the link capacity. In the case of channels that may be time varying (on rapid time scales) the quality indicator might be less relevant in determining potential capacity of the link.
Assuming that the above method is used to determine link capacity, the node which can support the best overall throughput, defined either as the maximum of the minimum throughputs on all links to/from that node, or as the sum of throughputs of all links to/from the node, may be chosen as the CCo. The node is selected from the set N.
3. Device Class: Based on the class of each of the nodes in N, the node in N with the best capabilities or the highest class may be chosen as the CCo. Some nodes in the network may be unable to function as the CCo. The CCo must maintain Device Class or Device Capabilities information obtained at the time of association. This data must enable the CCo to determine if a device can or cannot function in the role of a CCo.
4. Lowest Duty Cycle: In the AD-HOC network, some devices can only transmit or receive any given time (half duplex operation). In such systems, it is useful to select as the CCo a node that is not busy transmitting data for its own purposes (such as a video server transmitting SDTV/HDTV). This allows the node to dedicate most of its processing resources to network control functions and more efficiently use available channel bandwidth. As a part of the topology map creation process, devices may exchange parameters to indicate how busy a node is likely to be. Communication may develop an additional parameter which may be called an activity indicator which is a percentage of time, that the device is likely to spend transmitting/receiving data for purposes other than network control. The node with the lowest activity indicator may be chosen as the CCo in conjunction with other suitable criteria such as the coverage.
5. Combination of above factors: A combination of the above criteria may be used to determine the CCo. For example, a higher class device might get precedence over a lower class device even though the number of nodes reached by the lower class device is slightly higher. Or, a device that is not transmitting/receiving any data may have precedence over a device that is of a higher class but one that is likely to be busy transmitting its own data.
6. Order for Selection of CCo: Since there are multiple criteria by which a CCo may be appointed, the following order of precedence is proposed. If there is a tie among nodes in N for choice of CCos, the current CCo may choose one of the candidate nodes at random to be the new CCo. This order of selection consideration is also illustrated in Fig. 4.

Wherever, in either of the two above-illustrated selection processes, it is determined to make a CCo selection on the basis of just a few criteria, an excellent choice is one involving the use, combinationally, of the criteria referred to above as "Maximum Coverage" and "Lowest Duty Cycle".
There is thus described a novel and useful way for selecting the best-choice CCo in an ad-hoc network of either the distributed or centralized type. Springing from a full network topology map, data in that map is employed to assess and "recommend" such a selection.
While a preferred implementation of the invention has been described herein, variations and modification are certainly possible which come within the scope of the present invention as defined by the claims.

**Claims**

**1.** A method employable in the task, during organizing of an ad hoc network from a collection of plural nodes, of selecting a central coordinator node. where such organizing is taking place in a setting wherein there is available, to all of the nodes in the collection, a topology map (46) describing, for all of the nodes, their respective identities, capabilities, and associated inter-nodal communication link numbers and qualities, said method comprising analyzing (48) the topology map (46) to determine a set of nodes which are connected to each other bi-directionally, applying selection criteria (50) to the set of nodes to pre-designate at least one best candidate (52) for the central coordinator node, and

selecting the central coordinator node (54, 56, 58) from the at least one best candidate,

the method **characterized in that**

the selection criteria comprise lowest duty cycle,

and wherein the at least one best candidate is **characterized by** the lowest duty cycle.

**2.** The method of claim 1, wherein the selection criteria further comprise at least one drawn from the list including maximum coverage, maximum capacity and device class/device capability.

**3.** The method of claim 1, wherein the selection criteria further comprise maximum coverage and wherein the at least one best candidate is **characterized by** the maximum coverage and the lowest duty cycle.

**4.** The method of claim 1, **characterized in that**

the network to be organized comprises a current central coordinator node,

a plurality of best candidates is pre-designated, wherein a tie exists between the best candidates, and

the current central coordinator node chooses one of the plurality of best candidates as the new central coordinator node at random (56).

**5.** The method of claim 1, **characterized in that**

the network to be organized does not comprise a current central coordinator node.

a plurality of best candidates is pre-designated, wherein a tie exists between the best candidates, and

the first node of the plurality of best candidates which issues a self-confirmation as being the central coordinator node becomes the central coordinator node (54).

**6.** The method of claim 1, wherein said criteria applying is performed in a preferred sequence which has the descending hierarchical order of (1) device class/device capability. (2) maximum coverage, (3) maximum capacity, and (4) lowest duty cycle [50].

**Patentansprüche**

**1.** Verfahren, das bei der Aufgabe verwendbar ist, während der Organisation eines Adhoc-Netzes aus einer Ansammlung von mehreren Knoten einen zentralen Koordinatorknoten auszuwählen, wobei eine solche Organisation bei einer Einstellung erfolgt, bei der für alle Knoten in der Ansammlung eine topologische Karte (46) verfügbar ist, die für alle diese Knoten ihre jeweiligen Kennungen, Fähigkeiten und zugeordneten Zwischenknoten-Kommunikationsverbindungsnummern und -qualitäten beschreibt, wobei das Verfahren enthält:

Analysieren (48) der topologischen Karte (46), um eine Menge von Knoten zu bestimmen, die bidirektional miteinander verbunden sind,

Anwenden von Auswahlkriterien (50) auf die Menge von Knoten, um im Voraus wenigstens einen besten Kandidaten (52) für den zentralen Koordinatorknoten anzugeben, und

Auswählen des zentralen Koordinatorknotens (54, 56, 58) aus dem wenigstens einen besten Kandidaten,

wobei das Verfahren **dadurch gekennzeichnet ist, dass**

die Auswahlkriterien einen niedrigsten Auslastungsgrad enthalten,

und wobei der wenigstens eine beste Kandidat durch den niedrigsten Auslastungsgrad **gekennzeichnet** ist.

**2.** Verfahren nach Anspruch 1, wobei die Auswahlkriterien ferner wenigstens ein Kriterium enthalten, das aus der Liste entnommen ist, die die maximale Abdeckung, die maximale Kapazität und die Vorrichtungsklasse/Vorrichtungsfähigkeit enthält.

**3.** Verfahren nach Anspruch 1, wobei die Auswahlkriterien ferner eine maximale Abdeckung enthalten und wobei der wenigstens eine beste Kandidat durch die maximale Abdeckung und den niedrigsten Auslastungsgrad **gekennzeichnet** ist.

**4.** Verfahren nach Anspruch 1, **dadurch gekennzeichnet, dass**
das zu organisierende Netz einen aktuellen zentralen Koordinatorknoten enthält,
im Voraus mehrere beste Kandidaten angegeben werden, wobei zwischen den besten Kandidaten eine Bindung besteht, und
der aktuelle zentrale Koordinatenknoten einen der mehreren besten Kandidaten als den neuen zentralen Koordinatorknoten zufällig wählt (56).

**5.** Verfahren nach Anspruch 1, **dadurch gekennzeichnet, dass**
das zu organisierende Netz keinen aktuellen zentralen Koordinatorknoten enthält,
im Voraus mehrere beste Kandidaten angegeben werden, wobei zwischen den besten Kandidaten eine Bindung besteht, und
der erste Knoten der mehreren besten Knoten, der eine Selbstbestätigung, dass er der zentrale Koordinatorknoten sei, ausgibt, der zentrale Koordinatorknoten (54) wird.

**6.** Verfahren nach Anspruch 1, wobei das Anwenden der Kriterien in einer bevorzugten Folge ausgeführt wird, die eine abnehmende hierarchische Reihenfolge aus (1) Vorrichtungsklasse/Vorrichtungsfähigkeit, (2) maximaler Abdeckung, (3) maximaler Kapazität und (4) niedrigstem Auslastungsgrad (50) besitzt.

## Revendications

**1.** Procédé susceptible d'être employé, pendant l'organisation d'un réseau ad hoc à partir d'une collection de plusieurs noeuds, dans la tâche de sélection d'un noeud de coordonnateur central, où une telle organisation a lieu dans un paramétrage dans lequel il y a de disponible, pour tous les noeuds dans la collection, une carte de topologie (46) décrivant, pour tous les noeuds, leurs identités, capacités respectives, et des nombres et des qualités de liaison de communication entre noeuds associés, ledit procédé comprenant
l'analyse (48) de la carte de topologie (46) pour déterminer un ensemble de noeuds qui sont reliés les uns aux autres de façon bidirectionnelle,
l'application de critères de sélection (50) à l'ensemble de noeuds pour désigner à l'avance au moins un meilleur candidat (52) pour le noeud de coordonnateur central, et
la sélection du noeud de coordonnateur central (54, 56, 58) à partir du meilleur candidat,
le procédé étant **caractérisé en ce que**
les critères de sélection comprennent un rapport cyclique le plus bas,
et dans lequel le meilleur candidat est **caractérisé par** le rapport cyclique le plus bas.

**2.** Procédé selon la revendication 1, dans lequel les critères de sélection comprennent en outre au moins un critère tiré de la liste incluant une couverture maximale, une capacité maximale et une catégorie de dispositif / capacité de dispositif.

**3.** Procédé selon la revendication 1, dans lequel les critères de sélection comprennent en outre une couverture maximale et dans lequel le meilleur candidat est **caractérisé par** la couverture maximale et par le rapport cyclique le plus bas.

**4.** Procédé selon la revendication 1, **caractérisé en ce que**
le réseau à organiser comprend un noeud de coordonnateur central courant,
plusieurs meilleurs candidats sont désignés à l'avance, dans lesquels un lien existe entre les meilleurs candidats, et
le noeud de coordonnateur central courant choisit l'un des meilleurs candidats en tant que nouveau noeud de coordonnateur central au hasard (56).

**5.** Procédé selon la revendication 1, **caractérisé en ce que**
le réseau à organiser ne comprend pas de noeud de coordonnateur central courant,
plusieurs meilleurs candidats sont désignés à l'avance, dans lesquels un lien existe entre les meilleurs candidats, et
le premier noeud des meilleurs candidats qui délivre une auto-confirmation comme étant le noeud de coordonnateur central devient le noeud de coordonnateur central (54).

**6.** Procédé selon la revendication 1, dans lequel ladite application de critères est effectuée dans une séquence préférée qui a l'ordre hiérarchique descendant de (1) la catégorie de dispositif / capacité de dispositif, (2) la couverture maximale, (3) la capacité maximale et (4) le rapport cyclique le plus bas [50].

# FIG. 1

# FIG. 2

# FIG. 3

| TOPOLOGY TABLE FOR NODE A | | | | | |
|---|---|---|---|---|---|
| NODES (DEVICE CLASS OPTIONAL) | DISCOVERED NODE LISTS → | | | | |
| A | A | B | C | | |
| B | A | B | C(X) | | |
| C | A | B | C | D | E |
| | | | | | |

| TOPOLOGY TABLE FOR NODE D | | | | | |
|---|---|---|---|---|---|
| NODES | DISCOVERED NODE LISTS → | | | | |
| C | A | B | C | D | E |
| D | | | C | D | E |
| E | | | C | D | E |
| | | | | | |

# FIG. 4

| ORDER | CRITERIA | NOTE |
|---|---|---|
| 1 | DEVICE CLASS/DEVICE CAPABILITY | DEV CAN BE CCo OR NOT |
| 2 | NUMBER OF DISCOVERED NODES IN DISCOVERED NODE LIST | HIGHER IS PREFERRED |
| 3 | CAPACITY OR MAX PHY TRANSMISSION SPEED | HIGHER IS PREFERRED |
| 4 | DUTY CYCLE (FRACTION OF TIME DEVICE IS BUSY) | LOWER IS PREFERRED |
| 5 | OTHER (VENDOR DEFINED) | |

EP 1 624 628 B1

**EP 1 624 628 B1**

**REFERENCES CITED IN THE DESCRIPTION**

**Patent documents cited in the description**

- US 10775717 B
- US 10775967 B
- US 6751196 B1
- EP 0998154 A2